# EUROPEAN PATENT SPECIFICATION

(11) **EP 2 542 118 B1**
(45) Date of publication and mention of the grant of the patent: **02.04.2014**
(21) Application number: 12706794.0
(22) Date of filing: 07.02.2012
(51) Int. Cl.: F16B 7/20, F16B 12/20, F16B 21/02, F16B 12/28, A47B 47/00, F16B 7/04

(54) **A LOCKING DEVICE FOR DETACHABLY FIXING PARTS OF CONSTRUCTIONAL ELEMENTS TOGETHER**
SPERRVORRICHTUNG ZUR VORÜBERGEHENDEN BEFESTIGUNG VON BAUELEMENTEN ANEINANDER
DISPOSITIF DE VERROUILLAGE PERMETTANT DE FIXER ENSEMBLE DES ÉLÉMENTS DE CONSTRUCTION DE MANIÈRE DÉTACHABLE

(30) Priority: 11.02.2011 LV 110017
(43) Date of publication of application: 09.01.2013
(73) Proprietor: Huglock, SIA, 1006 Riga (LV)
(72) Inventor: MELLIS, Bruno, 1006 Riga (LV)
(74) Representative: Fortuna, Jevgenijs
(86) International application number: PCT/EP2012/052045
(87) International publication number: WO 2012/107442

(56) References cited:
- WO-A1-2008/062161
- DE-C1- 10 210 885
- GB-A- 965 052

## Description

### Technical field

The invention refers to devices for fastening or securing constructional elements together.

### Background Art

There are known various methods for making connection of constructional elements and different types of joints, where elements are arranged alongside and mutually forming angles of different size, mostly 0° and 90°, wherein the connected lateral surfaces of elements may be located in the same plane or different planes.

There is known a rotatable one-piece fixing member (US 3986780) intended for use in a noncircular apertured support panel which includes two flat surfaces facing in opposite directions, said fixing member comprising two supporting portions coupled to each other by a rigid rod and spaced apart by a distance equal to the thickness of the support panel, the first supporting portion which forms the end portion of said rod engaging against the first surface of the support and having, perpendicular to the longitudinal axis of said fixing member, a noncircular contour complementary to that of the noncircular aperture of the panel, said noncircular contour including at least two axes of symmetry, the second supporting portion which engages the second surface of the support, said fixing member further having at least two resiliently mounted locking bosses, said bosses each having an external contour the form of which is complementary to two diametrically opposite parts of the internal lateral face of said aperture, the disposition of said bosses having a plane of symmetry passing through the longitudinal axis of said fixing member, said plane of symmetry forming with the corresponding plane of symmetry of the contour of the first supporting portion at an angle equal to a fraction of a turn of pre-determined value. The main disadvantage of the known device is that it does not allow multiple assembly-disassembly of the joint. The durability of this joint depends on precise surface fitting of support panel and fixing member. After several assembles-disassembles the joint comes loose, which makes the whole construction infirm and could lead to disengagement of the fixing member.

There is known modular profile system (WO 2008/046907), comprising detachably interlinked supports and grooves, wherein the faces of the supports can be fixed to the bottoms of the grooves. The face of the supports comprise bolt each with a cross pin at the end. Bores are provided in the grooves, wherein the respective bolt of the supports can be inserted when bringing the supports and grooves closer. A rotatable bar with undercuts is housed in the respective bores in the grooves. The cross pins of the bolts can be guided behind the undercuts when the bar is rotated, wherein the respective bar is designed such that the rotation thereof locks the respective bolt by creating a positive fit. The supports and the grooves are provided with an anti-turn and anti-displacement device at the connection surfaces. The disadvantage of the known device is that the rotatable bar is visible from outside, which makes the profile system less visually attractive. Another significant disadvantage is that the design of the joint does not allow quick disassembly, because the angle of rotation of the rotatable bar for disengagement of the cross pin cannot be determined or predicted, thus disassembly of the known joints requires more time than it should.

There is known locking arrangement (EP1500350) for fixing two items of furniture together, especially - two sidewalls. The locking arrangement comprising two locking devices designed to be functionally identical and having a cup-shaped fixed part and a cutout formed in the associated bottom of the cup-shaped fixed part. The cutout comprises cutout sections extending radially outwards from a central axis; at least two cutout sections arranged at regular angular intervals from one another emanate from the central axis; a rotating part acting as an adjusting member is provided in the interior of the cup- or housing-shaped fixed part; the rotating part comprises an actuating part having a locking element situated axially offset in the direction of the bottom; the locking element has a configuration comprising radially outwardly projecting locking arms so that the locking element thus formed can be guided axially through the cutout. The known locking arrangement can be effectively used for fixing two sidewalls each to other. However it is not suitable for joining construction's elements having long arm (e.g. bar-type elements, or bar-type element and a plate).

There is known a locking device for detachably fixing constructional elements together comprising: a connector including a male fitting which has a stem projecting from a plate, and a head comprising four noses which project laterally from the stem (WO 2008/062161). The head is inserted in an aperture of a female node fitting and rotated into positive engagement with the inner face of the node fitting. The trailing faces of the four noses have oppositely-inclined ramps which act to provide tightening and alignment of the connector as the male part is rotated within the aperture.

### Disclosure of Invention

The aim of the invention is to create a locking device for detachably fixing parts of constructional elements together (in particular, bar-type constructional elements or bar-type element and a plate), which would provide fast and easy assembling, disassembling and re-assembling of the parts. The term "constructional elements" as used in the description and claims should be interpreted broadly, meaning any solid elements or parts to be joined together, including parts of furniture, parts of exhibition stands, design or decorative elements, parts of mannequins, elements of delimiting walls, partition lattice frames holders. The "constructional elements" according to the present invention could be also support for electronic device and electronic device to be attached to the support.

The aim is achieved by the offered device comprising a fixing member and a support. The fixing member comprising a rod and radially outwardly projecting locking arms, placed at the extremity of the rod. The support having a cut-out with cut-out sections extending radially outwards from a centre of symmetry of the support. The support further comprising a locking projections formed between the cut-out sections. The locking projections have a spring plate portion and a latching portion. The spring plate portions are set at an angle to a plane of an upper surface of the support and are provided with a socket shaped to receive and be engaged with part of the locking arms. The locking arms are adapted to be guided axially through the cut-out and rotated to effect locking - latching behind the locking projections. According to the preferred embodiment, the latching portions are being projections formed between peripheral parts of the cut-out sections and adapted to be engaged with a peripheral part of the locking arms, so as to draw up parts to be fixed together and to provide support for the locking arms.

Further, substance of the invention and its various embodiments are described by way of examples with references to the drawings.

### Brief description of drawings

Fig. 1A and 1B show one embodiment of the fixing member; Fig. 1A - side view, Fig. 1B - bottom view;
Fig. 2A-2D show one embodiment of the support; Fig. 2A - top view, Fig. 2B - elevated side view, 2C - bottom view, 2D - bottom view of the locking projection;
Fig. 2E, 2F and 2G show another embodiment of the support; Fig. 2E - bottom view, Fig. 2F - elevated side view, Fig. 2G - lateral cross-section;
Fig. 3A shows third embodiment of the support, which can be used with fixing member having two locking arms;
Fig. 3B shows embodiment of the fixing member having two locking arms;
Fig. 4A and 4B show examples of use of the fixing member on constructional elements; Fig. 5A shows forth embodiment of the support;
Fig. 5B shows another embodiment of the fixing member having four locking arms;
Fig. 6 shows forth embodiment of the support being attached to construction element;
Fig. 7 shows example of joining five construction elements together using the offered locking device;
Fig. 8A and 8B show lateral cross-section of two parts joined together using the locking device;
Fig. 9 shows three parts joined together using the offered locking means.

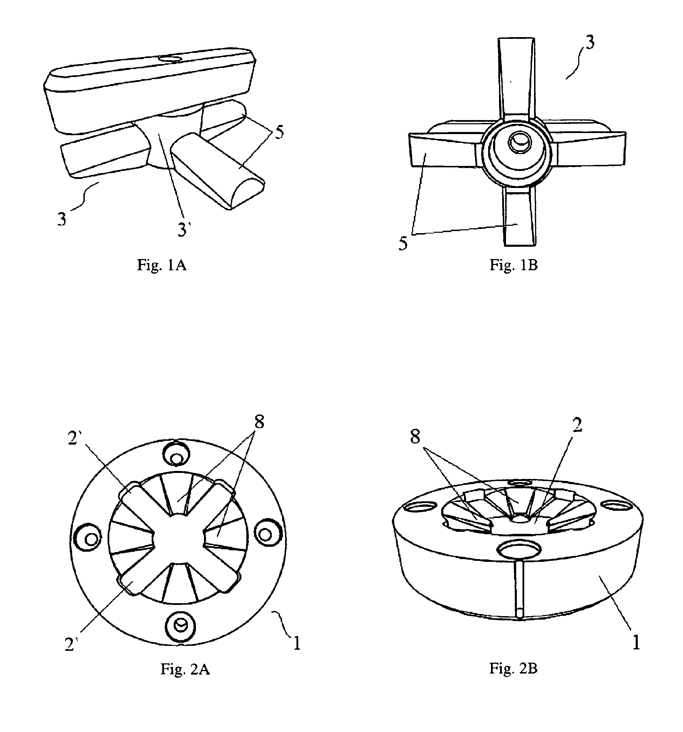

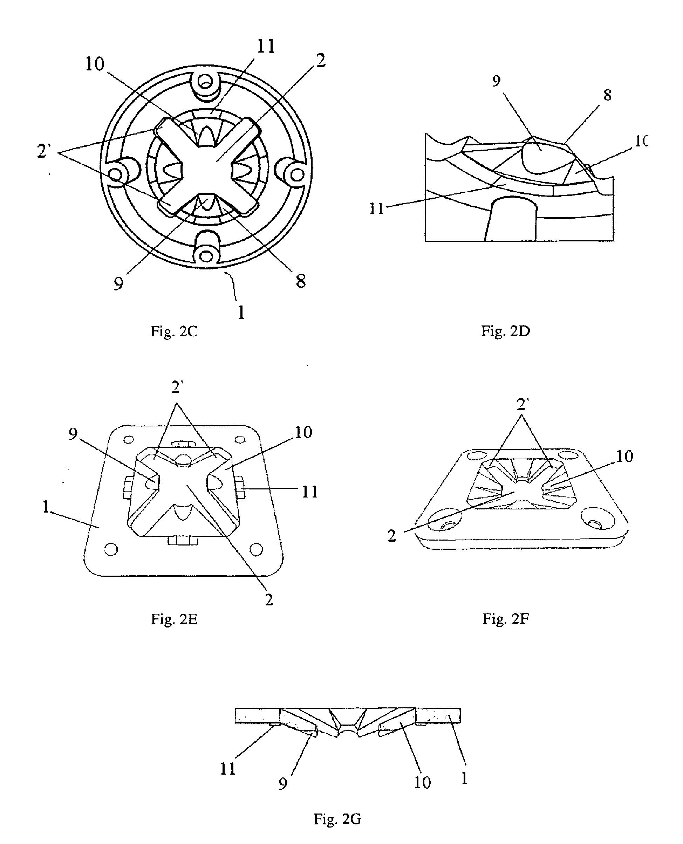

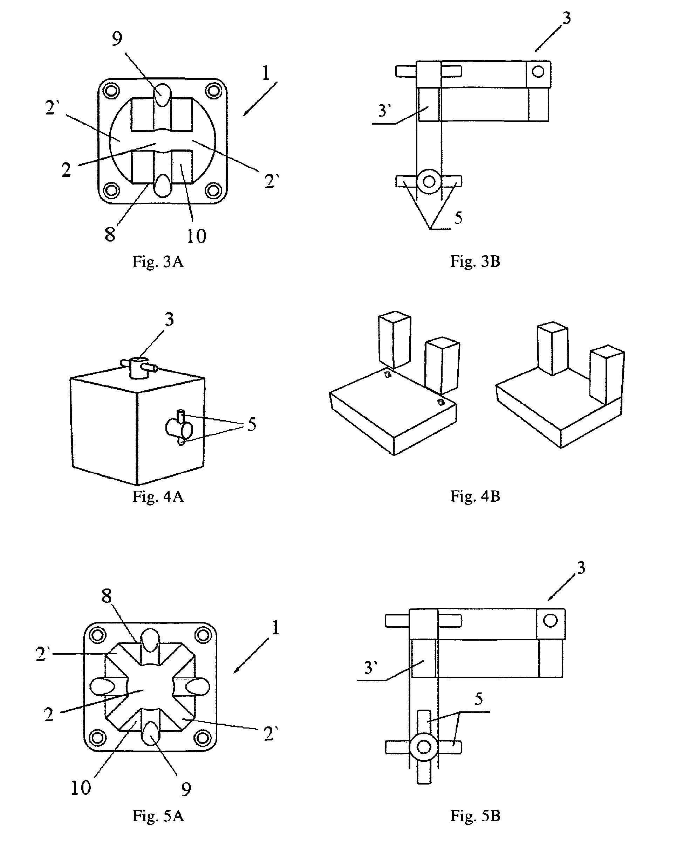

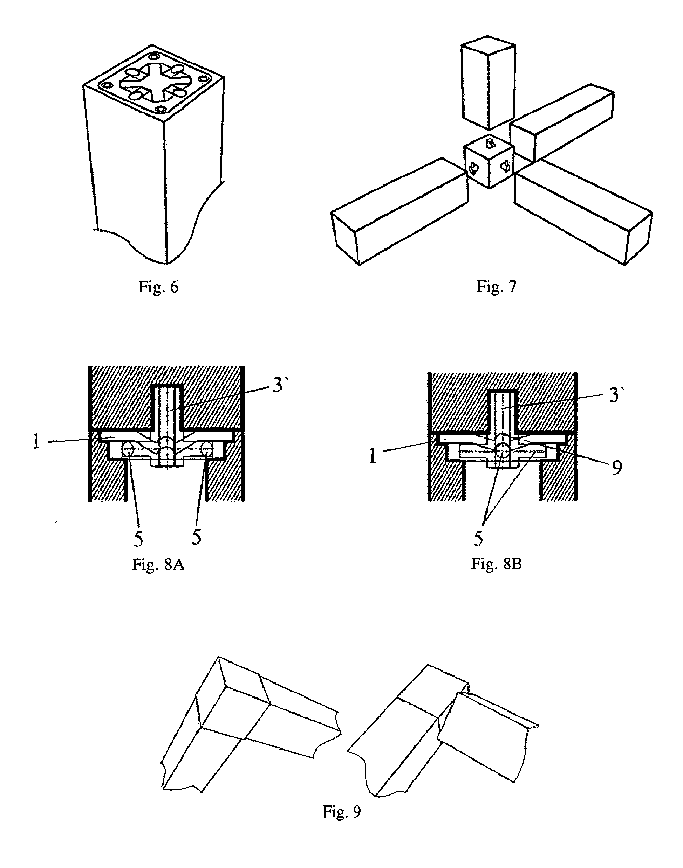

A locking device for detachably fixing parts of constructional elements together, in particular, two bar-type constructional elements (Fig. 9), or bar-type element and a plate (Fig. 4B), the device comprising a fixing member 3 (Fig. 1A-1B 3B, 5B) and a support 1 (Fig. 2A-2G, 3A, 5A). The fixing member 3 comprising a rod 3' and radially outwardly projecting locking arms 5, placed at the extremity of the rod 3'. Longitudinal axis of the rod 3' is perpendicular to the axis of symmetry of the locking arms 5.

The support 1 has a cut-out 2. The cut-out 2 has cut-out sections 2' extending radially outwards from a centre of symmetry of the support 1. The cut-out sections 2' are arranged at pre-defined (preferably regular) angular intervals from one another. The cut-out 2 is preferably cross-shaped (Fig. 2C), however other configurations are also possible (e.g. linear as shown in Fig. 3A). The support 1 further comprises a locking projections 8 formed between the cut-out sections 2'. The fixing member's 3 locking arms 5 are adapted to be guided axially through the cut-out 2, where in order to effect locking, the fixing member 3 can be guided through the cut-out 2 and, by means of a subsequent rotation, can be latched behind the locking projections 8. It is obvious that to be able to freely guide locking arms 5 through the cut-out 2, the dimensions of the cut-out 2 (the distance up to the symmetry centre and the width) should be slightly larger than the dimensions (the length and the width) of the locking arms 5.

Each locking projection 8 has a spring plate portion 10 and a latching portion 11. The spring plate portions 10 are elastically deformable spring plate or are provided with equivalent means adapted to act as a spring plate. The portions 10 are located closer to the centre of symmetry of the support 1 than portion 11 and are set at an angle to a plane of an upper surface of the support 1 (Fig. 2G). The inner face of the spring plate portions 10 is provided with a socket (a hollow) 9 adapted to receive part of the surface of the locking arms 5 (the part, which is closer to the centre of the fixing member) and be engaged with part of the locking arms 5, such that once the fixing member 3 is rotated for latching, the spring plate portions 10 would apply pressure to the locking arms 5 until the locking arms 5 are being received by the sockets 9, thus ensuring secure anchoring against free rotation of the fixing member 3 (in the assembled position the spring plate portions 10 are directed towards the locking arms). The latching portions 11 are being projections formed between peripheral parts of the cut-out sections 2' and adapted to be engaged with a peripheral part of the locking arms 5, so as to draw up parts to be fixed together and to provide support for the locking arms 5.

The involution of the latching portion 11 preferably has the shape of isosceles trapezium (Fig. 2D, 2E). This or similar shape of the latching portion 11 is necessary to ensure that it can function as a ramp (ascending and descending) and support for the locking arms 5. The inclined planes of the ramp (legs of the trapezium) allow smooth rising of the locking arms 5 to the upper part of the ramp and smooth going down.

The engagement of the locking arms 5 with the latching portions 11 (with the upper base of the trapezium) ensures a fixing function, while spring plate portions 10 prevent free rotation of the fixing member 3.

According to another embodiment (Fig. 3A, 5A, 8A, 8B) the support 1 may have locking projections 8 having a spring plate portion 10 being set at an angle to a plane of an upper surface of the support 1 and provided with a socket 9 shaped to receive and be engaged with part of the locking arms 5, such that once the fixing member 3 is latched, the spring plate portions 10 would prevent free rotation of the fixing member 3.

The fixing member 3 and the support 1 can be mounted or fixed to the parts to be connected (bar-type constructional elements, bar-type element and a plate, etc.) by means of screws, adhesive, welding or the equivalent means. The member 3 and the support 1 can also be integral parts of the elements to be connected obtained for example, by moulding or casting process. The support 1 can be cup-shaped e.g. as shown in Fig. 2B, or plate-shaped e.g. as shown in Fig. 2E-2G. The cup-shaped support 1 can be mounted on the constructional element having even surface. In this case the room for receiving the fixing member 3 between the upper surface of the support 1 (i.e. cup's bottom) and surface of the constructional element is ensured by cup walls. The plate-shaped support 1 can be mounted on the constructional element having hollow adapted to receive the fixing member 3 (Fig. 6, 8A-8B).

The offered device can be used as follows. The constructional elements (e.g. parts of furniture, construction profiles, elements of decoration, or elements of toy construction set, parts of mannequin, electronic device to a holder) provided with the fixing member 3 and the support 1 can be detachably joined together by guiding fixing member's 3 locking arms 5 axially through the support's 1 cut-out 2 and rotation of one of the constructional elements around longitudinal axis of the fixing member 3 (e.g. by 90° or 45°) until the locking arms 5 latch behind the locking projections 8. Typically this is accompanied by a "click" sound, which confirms that the locking arms 5 are fixed and received by the sockets 9. Disassembling of the constructional elements can be made in opposite order: after rotation of one element the locking arms 5 are disengaged from the locking projections 8 and the fixing member is drawn out from the cut-out 2.

The device described above can be used for producing different types of furniture, exhibition stands and design elements, mannequins, as well as for mounting of separating and delimiting walls, partition lattice frames and for producing of any lattice type structures, where fast assembling and disassembling is needed. The proposed fixing means provides possibility for easy assembling, disassembling and re-assembling of different plate-type and the rod-like components. The device can also be used for producing holders, supports or stands for electronic devices.

## Claims

1. A locking device for detachably fixing constructional elements together comprising:
(i) a fixing member (3) comprising a rod (3') and radially outwardly projecting locking arms (5), placed at the extremity of the rod (3'), which longitudinal axis is perpendicular to the axis of symmetry of the locking arms (5),
(ii) and a support (1) having a cut-out (2); the cut-out (2) having cut-out sections (2') extending radially outwards from a centre of symmetry of the support (1), the cut-out sections (2') are arranged at pre-defined angular intervals from one another; the support (1) further comprises a locking projections (8) formed between the cut-out sections (2'); the fixing member's (3) locking arms (5) are adapted to be guided axially through the cut-out (2), where in order to effect locking, the fixing member (3) can be guided through the cut-out (2) and, by means of a subsequent rotation, can be latched behind the locking projections (8), **characterized in that** each locking projection (8) has a spring plate portion (10) and a latching portion (11); the spring plate portions (10) are located closer to the centre of symmetry of the of the support (1), are set at an angle to a plane of an upper surface of the support (1) and are provided with a socket (9) shaped to receive and be engaged with part of the locking arms (5), such that once the fixing member (3) is latched, the spring plate portions (10) would ensuring secure anchoring against free rotation of the fixing member (3); the latching portions (11) are being projections formed between peripheral parts of the cut-out sections (2') and adapted to be engaged with a peripheral part of the locking arms (5), so as to draw up parts to be fixed together and to provide support for the locking arms (5).

2. The locking device according to claim 1, **characterized in that** locking projections (8) having a spring plate portion (10), which is being set at an angle to a plane of an upper surface of the support (1) and provided with a socket (9) shaped to receive and be engaged with part of the locking arms (5), such that once the fixing member (3) is latched, the spring plate portions (10) would prevent free rotation of the fixing member (3).

3. The locking device according to claim 1 or 2, **characterized in that** the cut-out (2) is cross-shaped.

4. Use of the locking device according to any preceding claims.

5. A furniture, construction profile, mannequin, electronic device holder or toy construction set containing the locking device according to claims 1, 2 or 3.

## Patentansprüche

1. Eine Sperrvorrichtung für das lösbare Verbinden von Konstruktionselementen bestehend aus:
(i) einem Befestigungselement (3) mit einer Stange (3') und nach außen gerichteten Arretierarmen (5), die sich am Stangenende (3') befinden, deren Längsachse senkrecht zur Achssymmetrie der Arretierarme (5) steht, (ii) und einer Halterung (1) mit einem Ausschnitt (2); der Ausschnitt (2) hat Ausschnittbereiche (2'), die von der symmetrischen Mitte der Halterung (1) nach außen angeordnet sind, die Ausschnittbereiche (2') sind in vordefinierten Winkelabständen zueinander angeordnet; die Halterung (1) hat darüber hinaus Verriegelungsnasen (8), die zwischen den Ausschnittbereichen (2') angeordnet sind; die Arretierarme (5) der Befestigungselemente sind so adaptiert, dass sie axial durch den Ausschnitt (2) geführt werden, wo, um eine Verriegelung zu bewirken, das Befestigungselement (3) durch den Ausschnitt (2) geführt werden und aufgrund der nachfolgenden Drehung hinter den Verriegelungsnasen (8) einrasten kann, ist **dadurch gekennzeichnet, dass** jede Verriegelungsnase (8) ein Federtellerteil (10) und ein Rastteil (11) aufweist; die Federplattenteile (10) befinden sich in der Nähe der Symmetriemitte der Halterung (1) und sind in einem Winkel auf die Ebene einer darüber liegenden Fläche der Halterung eingestellt und mit einer Buchse (9) versehen, deren Form die Aufnahme und das Eingreifen in einen Teil der Arretierarme (5) ermöglicht, so dass, nach dem Einrasten des Befestigungselements (3) das Federtellerteil (10) eine sichere Verankerung zum Schutz vor dem freien Drehen des Befestigungselements (3) darstellt; die Rastteile (11) sind Vorsprünge, die zwischen den peripheren Teilen der Ausschnittsbereiche (2') angeordnet sind und so anliegen, dass sie in ein peripheres Teil der Arretierarme (5) eingreifen, um auf diese Weise Teile zusammenzuziehen und miteinander zu verbinden, so dass sich ein Halt für die Arretierarme (5) ergibt.

2. Die Sperrvorrichtung gemäß Anspruch 1 ist **dadurch gekennzeichnet, dass** die Verriegelungsnasen (8) ein Federtellerteil (10) haben, das in einem Winkel auf die Ebene einer darüber befindlichen Fläche der Halterung (1) eingestellt und mit einer Buchse (9) versehen ist, deren Form die Aufnahme und den Eingriff in einen Teil der Arretierarme (5) ermöglicht, so dass nach dem Einrasten des Befestigungselements, die Federplattenteile (10) das freie Drehen des Befestigungselements (3) verhindern.

3. Die Sperrvorrichtung gemäß Anspruch 1 oder 2 ist **dadurch gekennzeichnet, dass** sie einen kreuzförmigen Ausschnitt (2) hat.

4. Verwendung der Sperrvorrichtung gemäß den vorhergehenden Ansprüchen.

5. Ein Möbelstück, ein Bauprofil, eine Schaufensterpuppe, ein Elektrogerätehalter oder ein Spielzeugset können die Sperrvorrichtung gemäß den Ansprüchen 1, 2 oder 3 enthalten.

## Revendications

1. Dispositif de verrouillage pour fixer de façon détachable des éléments de construction ensemble, comprenant :
(i) un membre de fixation (3) comprenant une tige (3') et des bras de verrouillage faisant saillie en sens radial vers l'extérieur (5), placé à l'extrémité de la tige (3'), lequel axe longitudinal est perpendiculaire à l'axe de symétrie des bras de verrouillage (5),
(ii) et un support (1) comportant une découpe (2) ; la découpe (2) ayant des sections de découpe (2') s'étendant en sens radial vers l'extérieur à partir d'un centre de symétrie du support (1), les sections de découpe (2') sont disposées à des intervalles angulaires prédéfinis les unes par rapport aux autres ; le support (1) comprend en outre des parties saillantes de verrouillage (8) formées entre les sections de découpe (2') ; les bras de verrouillage (5) du membre de fixation (3) sont adaptés pour être guidés en sens axial à travers la découpe (2), où afin de réaliser le verrouillage, le membre de fixation (3) peut être guidé à travers la découpe (2) et, au moyen d'une rotation ultérieure, peut être verrouillé derrière les parties saillantes de verrouillage (8), **caractérisé en ce que** chaque partie saillante de verrouillage (8) comporte une partie de plaque à ressort (10) et une partie de verrouillage (11) ; les parties de plaque à ressort (10) sont situées plus près du centre de symétrie du support (1), sont placées selon un angle par rapport à un plan d'une surface supérieure du support (1) et sont pourvues d'une douille (9) profilée pour recevoir et être mise en prise avec une partie des bras de verrouillage (5), de telle sorte qu'une fois que le membre de fixation (3) est verrouillé, les parties de plaque à ressort (10) assureraient un ancrage solide empêchant la rotation libre du membre de fixation (3) ; les parties de verrouillage (11) sont des parties saillantes formées entre des parties périphériques des sections de découpe (2') et adaptées pour être amenées en prise avec une partie périphérique des bras de verrouillage (5), de façon à attirer les parties à fixer l'une à l'autre et à fournir un support pour les bras de verrouillage (5).

2. Dispositif de verrouillage selon la revendication 1, **caractérisé en ce que** les parties saillantes de verrouillage (8) possèdent une partie de plaque à ressort (10), qui est placée selon un angle par rapport à un plan d'une surface supérieure du support (1) et pourvue d'une douille (9) profilée pour recevoir et être mise en prise avec une partie des bras de verrouillage (5), de telle sorte qu'une fois que le membre de fixation (3) est verrouillé, les parties de plaque à ressort (10) empêcheraient une rotation libre du membre de fixation (3).

3. Dispositif de verrouillage selon la revendication 1 ou 2, **caractérisé en ce que** la découpe (2) est en forme de croix.

4. Utilisation du dispositif de verrouillage selon l'une quelconque des revendications précédentes.

5. Meuble, profil de construction, mannequin, support de dispositif électronique ou ensemble de construction ludique contenant le dispositif de verrouillage selon les revendications 1, 2 ou 3.
